# EUROPÄISCHE PATENTSCHRIFT

(11) **EP 1 799 732 B1**
(45) Veröffentlichungstag und Bekanntmachung des Hinweises auf die Patenterteilung: **05.03.2008**
(21) Anmeldenummer: 05799114.3
(22) Anmeldetag: 06.10.2005
(51) Int. Cl.: C08G 12/32, C08L 61/28, C08K 5/00, C08K 5/19

(54) **WÄSSRIGE TRÄNKHARZFLOTTE**
AQUEOUS IMPREGNATING RESIN SOLUTION
SOLUTION AQUEUSE DE RESINE IMPREGNATRICE

(30) Priorität: 08.10.2004 DE 102004049340; 23.06.2005 DE 102005029629
(43) Veröffentlichungstag der Anmeldung: 27.06.2007
(73) Patentinhaber: BASF SE, 67056 Ludwigshafen (DE)
(72) Erfinder: LUNKWITZ, Ralph, 67434 Neustadt (DE); ROBERT, Alain, 67150 Niederkirchen (DE); DECHER, Jakob, 67240 Bobenheim-Roxheim (DE); HORSTMANN, Tilo, 67098 Bad Dürkheim (DE); REIF, Martin, 67354 Römerberg (DE); JAECKH, Christof, 69120 Heidelberg (DE)
(86) Internationale Anmeldenummer: PCT/EP2005/010764
(87) Internationale Veröffentlichungsnummer: WO 2006/040068

(56) Entgegenhaltungen:
- DE-A1- 4 117 844
- "Antiseptics for timber contg. ammoniacal boron and quat. ammonium cpds. - e.g. sodium tetra:borate, sodium octa:borate and di:alkyl-di:methyl-ammonium chloride" DERWENT, 7. Januar 1997 (1997-01-07), XP002321443 -& JP 09 001508 A 7. Januar 1997 (1997-01-07)

## Beschreibung

Die vorliegende Erfindung betrifft wässrige Tränkharzflotten enthaltend
(A) 77,5 bis 99,8 Gew.%, bezogen auf die Tränkharzflotte, an wässrigen Kondensaten auf Basis von Melamin und Formaldehyd
(B) 0,1 bis 20 Gew.-%, bezogen auf die Tränkharzflotte, einer oder mehrerer quartärer Ammoniumverbindungen der allgemeinen Formel I

   (R₁R₂R₃N⁺)X⁻ (I)

   wobei
   R₁ für einen C₉-C₂₄ Alkyl- oder Alkoxylrest oder für einen Alkylenoxidrest H(OCₘH₂ₘ)ₙ
      mit m = 1 bis 6 und
      n = 1 bis 10 steht,
      wenn R₂ nicht für einen Alkylenoxidrest mit n = 1 steht und
      n = 2 bis 10,
      wenn R₂ für einen Alkylenoxidrest mit n = 1 steht,
   R₂ für einen C₁-C₂₄ Alkyl- oder Alkoxylrest oder für einen Alkylenoxidrest H(OCₘH₂ₘ)ₙ mit m = 1 bis 6 und n = 1 bis 10, für einen Benzyl- oder Phenylrest steht,
      R₃ und R₄ für einen C₁-C₃-Alkylrest steht und
      X für ein Äquivalent eines Anions-steht
(C) 0,1 bis 2,5 Gew.%, bezogen auf die Tränkharzflotte, einer wässrigen Härterlösung.

Die Erfindung betrifft ferner eine wässrige Tränkharzmischung aus den Komponenten (A) und (B); sowie eine wässrige Härtermischung aus den Komponenten (B) und (C). Darüber hinaus betrifft die Erfindung einen Tränkharzfilm beinhaltend mit der wässrigen Tränkharzflotte imprägnierte cellulosehaltige Faserstoffe. Weiterhin betrifft die Erfindung die Verwendung der wässrigen Tränkharzflotte, bzw. des Tränkharzfilms zur antistatischen Ausrüstung beschichteter Werkstoffe.

Die Gefahren einer elektrostatischen Aufladung sind vielseitig und bedeuten ein zunehmendes Risiko in Umgebungen, in denen elektronische Geräte benutzt werden.

Neben der Gefahr der Beschädigung empfindlicher elektronischer Schaltungen, wie beispielsweise bei Computern, kann die Entzündung von leicht entflammbaren Reinigungs- und Lösungsmitteln durch elektrische Funken nicht ausgeschlossen werden. Als weiterer Nachteil ist die stärkere Verschmutzungsneigung durch die anziehende Wirkung auf kleine Teilchen wie Staub, Rauchpartikel oder Nebeltröpfen zu nennen. Ferner kann ein längerer Aufenthalt in der Nähe hoch aufgeladener Produkte zu Kopfschmerzen und Unwohlsein führen. Ein Funkenüberschlag kann ferner Schmerzempfindungen verursachen, die ihrerseits gegebenenfalls durch Schreckreaktionen zu gefährlichen Situationen führen können.

Im Stand der Technik werden zwei Wege verfolgt, die Möglichkeit der elektrostatischen Aufladung zu reduzieren. Der eine Weg besteht in der Verwendung einer weiteren Schutzschicht. US 5,089,327 beschreibt eine verringerte Aufladung unter Verwendung von Papier, das mit einem wasserlöslichen Polymer aus quartären polykationischen Ammoniumverbindungen gesättigt wurde. DE-A 101 15 567 offenbart, dass eine auf dem Dekorpapier aufgebrachte Schicht aus polymeren Material, vorzugsweise Polyanilin oder Polypyrrol, die Möglichkeit der statischen Aufladung reduziert. Der andere Weg besteht darin, das verwendete Tränkharz zu modifizieren. In DE-A 41 17 844 wird beschrieben, das mit einem Gemisch aus einem Melamin-Formaldehyd-Kondensat und einer quartären niedermolekularen Ammoniumverbindung eine verringerte Aufladung zu erreichen ist. Die quartäre niedermolekulare Ammoniumverbindung weist die allgemeine Formel (R¹ₙR²₄₋ₙN⁺)X⁻ auf, wobei n = 0, 1, 2 oder 3 ist, R¹ für einen C₁-C₈-Alkylrest oder einem Benzylrest steht, R² einen C₁-C₈-Alkylrest bedeutet, der eine Hydroxy- oder eine Amidogruppe trägt, und X für ein Äquivalent eines Anions steht.

Neben einer Vermeidung von elektrostatischer Aufladung wünschen beispielsweise die Kunden von Fußbodenbelägen, dass die Fußbodenbeläge ferner antimikrobiell wirken.

Aufgabe der vorliegenden Erfindung war es, eine Tränkharzflotte und einen daraus hergestellten Tränkharzfilm aufzufinden, der zur Herstellung von filmbeschichteten Werkstoffen mit geringer Neigung zur elektrostatischen Aufladung geeignet ist. Ferner sollte das Antistatikum in geringeren Mengen als im Stand der Technik beschrieben eingesetzt werden und vorteilhaft halogenfrei sein. Desweiteren sollte ein Tränkharzfilm aufgefunden werden, der antimikrobiell wirkt.

Demgemäss wurde die eingangs definierte Tränkharzflotte gefunden.

Als Komponente (A) kommen wässrige Melamin-Formaldehyd-Kondensate in Betracht, wobei das Molverhältnis von Melamin zu Formaldehyd 1:1 bis 1:2,2 betragen kann. Die Kondensation von Melamin und Formaldehyd erfolgt unter an sich bekannten Bedingungen im basischen Milieu bei pH-Werten von 8 bis 10 und Temperaturen von 80 bis 100°C.

Weiterhin kommen auch Mischkondensate in Betracht, bei denen von 1 bis 10 Gew.-% Harnstoff, bezogen auf Melamin, einkondensiert sein kann. Die Herstellung solcher Mischkondensate ist bekannt und wird üblicherweise bei pH-Werten von 8 bis 10 und Temperaturen von 70 bis 100°C durchgeführt.

Der Endpunkt der jeweiligen Kondensationsreaktion kann über die Trübungstemperatur bestimmt werden, indem 1 g des Reaktionsgemisches mit der 5fachen Menge an Wasser versetzt werden, worauf die Temperatur gemessen wird, bei der diese Mischung sich eintrübt. Üblicherweise wird bis zu einer Trübungstemperatur von 40 bis 60°C kondensiert.

Bei der Herstellung der Kondensate können alle dem Fachmann bekannten Zusatz-, Modifizierungs- und Hilfsmittel in Mengen von 2 bis 8 Gew.-%, bezogen auf den Feststoffgehalt, mitverwendet werden.

Die Herstellung der wässrigen Kondensate erfolgt vorteilhaft so, dass Lösungen mit Feststoffgehalten von 40 bis 70 Gew.-% erzielt werden. Als Feststoffgehalt wird hier der Trockenrückstand bezeichnet, der ermittelt wird, indem 1 g Harzlösung zwei Stunden lang im Trockenschrank bei 120°C getrocknet wird.

Die Menge an (A) wird so gewählt, dass, bezogen auf die Tränkharzflotte, 77,5 bis 99,8 Gew.-% an (A) vorliegen, bevorzugt 80 bis 99,5 Gew.%, besonders bevorzugt 85 bis 99,2 Gew.-%

Als quartäre Ammoniumverbindung (B) kommen Verbindungen der allgemeinen Formel (I) in Betracht:

(R₁R₂R₃R₄N⁺)X⁻ (I)

wobei
R₁ für einen C₉-C₂₄ Alkyl- oder Alkoxylrest oder für einen Alkylenoxidrest H(OCₘH₂ₘ)ₙ mit m = 1 bis 6 und n = 1 bis 10 steht, wenn R₂ nicht für einen Alkylenoxidrest mit n = 1 steht und n = 2 bis 10, wenn R₂ für einen Alkylenoxidrest mit n = 1 steht,
R₂ für einen C₁-C₂₄ Alkyl- oder Alkoxylrest oder für einen Alkylenoxidrest H(OCₘH₂ₘ)ₙ mit m = 1 bis 6 und n = 1 bis 10, für einen Benzyl- oder Phenylrest steht,
R₃ und R₄ für einen C₁-C₃-Alkylrest steht und
X für ein Äquivalent eines Anions steht.
R₁ steht vorteilhaft für einen unsubstituierten C₉-C₂₄ Alkyl- oder Alkoxylrest, einen methylsubstituierten C₈-C₂₃ Alkyl- oder Alkoxylrest oder für einen C₁-C₍₈₋ₓ₎-Alkyl-substituierten C₈-C₍₁₆₊ₓ₎ Alkyl- oder Alkoxylrest mit x von 0 bis 6, wobei der Alkyl- oder Alkoxylrest vorteilhaft an der 2. Position substituiert ist, oder für einen Alkylenoxidrest der Formel H(OCₘH₂ₘ)ₙ mit m = 1 bis 4 und n = 1 bis 10; bevorzugt mit n = 1 bis 6, insbesondere mit n = 1 bis 3, wenn R₂ nicht für einen Alkylenoxidrest mit n = 1 steht und n = 2 bis 10, bevorzugt mit n = 2 bis 6, insbesondere mit n = 2 oder 3,wenn R₂ für einen Alkylenoxidrest mit n = 1 steht. Besonders bevorzugt beträgt m = 2. Bei einer substituierten, vorteilhaft an der 2. Position substituierten, Alkyl- oder Alkoxylkette besteht die Hauptkette vorteilhaft aus einer C₈-C₂₀-Alkyl- oder Alkoxylkette; wobei die Alkyl- oder Alkoxylkette gegebenenfalls mit einem C₁-C₄ Alkylrest substituiert ist. Bevorzugt steht R₁ für einen unsubstituierten oder C₁-C₄ Alkyl-substituierten C₁₂-C₂₀ gesättigten oder ungesättigten Alkyl- oder Alkoxylrest oder für einen Alkylenoxidrest der Formel H(OCₘH₂ₘ)ₙ mit m = 2 und n = 1 bis 3, wenn R₂ nicht für einen Alkylenoxidrest mit n = 1 steht. Besonders bevorzugt steht R₁ für einen unsubstituierten C₁₂-C₂₀ gesättigten oder ungesättigten Alkyl- oder Alkoxylrest. Insbesondere steht R₁ für einen unsubstituierten oder methylsubstituierten Hexadecyl-, Heptadecyl-, Octadecyl-, Nonadecyl- oder lcosanyl-Rest.
R₂ steht vorteilhaft für einen C₁-C₂₀-Alkyl- oder Alkoxylrest, für einen Alkylenoxidrest der Formel H(OCₘH₂ₘ)ₙ mit m = 1 bis 4, insbesondere 2, und n = 1 bis 10, bevorzugt 1 bis 6, insbesondere 1 bis 3, oder für einen Phenyl- oder Benzylrest. Die Alkyl-, Alkoxyl-, Phenyl- oder Benzyl-Reste können substituiert oder unsubstituiert sein.
R₃ und R₄ stehen bevorzugt für Methyl- oder Ethylreste, insbesondere Methylreste.
X steht für ein Äquivalent eines Anions. Dabei kommen Anionen von Mineralsäure wie Halogenidanionen in Betracht sowie Nitrat, Sulfat, Hydrogensulfat, Phosphat, Hydrogenphosphat, Dihydrogenphosphat oder Perchlorat. Weiterhin eignen sich Alkylsulfate wie beispielweise Methylsulfat oder Ethylsulfat oder auch Alkylsulfonate wie Methylsulfonat und Ethylsulfonat oder Arylsulfonate wie Toluolsulfonate. Ebenso kommen Anionen organischer Säuren wie Formiat, Oxalat, Acetat oder Maleinat in Betracht. Ferner kommen Hydroxid-lonen in Betracht. Besonders bevorzugt sind Sulfate, insbesondere Ethylsulfat, Sulfonate, insbesondere Methylsulfonat, und Hydroxid-lonen.

Besonders bevorzugt wird als Komponente (B) eine unsubstituierte oder methylsubstituierte C₁₆-C₂₀-Alkyl-Dimethyl-C₁-C₁₂-Alkyl-Ammonium-Verbindung oder eine einfach oder mehrfach ethoxylierte, insbesondere einfach ethoxylierte, Dimethyl-C₁-C₁₂-AlkylAmmonium-Verbindung eingesetzt. Insbesondere wird als Komponente (B) eine unsubstituierte oder methylsubstituierte C₁₆-C₂₀-Alkyl-Dimethyl-C₁-C₁₂-Alkyl-AmmoniumVerbindung verwendet.

Die Komponente (B) kann auch aus Mischungen von quartären Ammoniumverbindungen gemäß der Formel (1) bestehen.

Die Menge an (B) wird so gewählt, dass, bezogen auf die Tränkharzflotte 0,1 bis 20 Gew.-% an (B) bezogen auf den Feststoff der Komponente (B) vorliegen, bevorzugt 0,3 bis 18 Gew.-%, besonders bevorzugt 0,5 bis 13 Gew.-%, ganz besonders bevorzugt 0,5 bis 3, insbesondere 1 bis kleiner 2 Gew.-%.

Die Komponente (B) kann in fester oder in Form einer Lösung eingesetzt werden.

Als Komponente (C) können alle dem Fachmann bekannten Härter verwendet werden. Als Härter kommen beispielsweise Bronstedt-Säuren wie organische Sulfonsäuren und Carbonsäuren sowie deren Anhydride, z.B. Maleinsäure, Maleinsäureanhydrid und Ameisensäure, Ammoniumverbindungen, z.B. Ammoniumsulfat, Ammoniumsulfit, Ammoniumnitrat, Ethanolammoniumchlorid, Dimethylethanolammoniumsulfit sowie Härterkombinationen wie Morpholin/p-Toluolsulfonsäure in Betracht. Ferner können als Komponente (C) vorteilhaft primäre, sekundäre und/oder tertiäre Amine, Hydroxyalkanolamine, Monoethanolamin, Methyl-Ethanolamin und/oder Morpholin verwendet werden.

Es können auch Mischungen von unterschiedlichen Härtern verwendet werden.

Die Härter können in Mengen von 0,1 bis 2,5 Gew.-% wässriger Härterlösung, bezogen auf das wässrige Tränkharzflotte, vorteilhaft 0,2 bis 2,0, bevorzugt 0,3 bis 2,0, eingesetzt werden. Dem Fachmann ist bekannt, dass die Härterdosierung den jeweiligen anwendungstechnischen Erfordernissen angepasst werden kann, wobei die Reaktivität der Tränkharz/Härter-Gemische z. B. über die Messung der Trübungszeiten und Gelierzeiten entsprechend eingestellt werden kann.

Die erfindungsgemäße Tränkharzflotte weist einen Feststoffgehalt von 40 bis 70 Gew.-% und Viskositäten im Bereich von 20 bis 200 mPas (20°C) auf.

Zur Herstellung der Tränkharzflotte werden beispielsweise die Komponenten (A), (B) und (C) miteinander gemischt.

Ferner kann zuerst eine Tränkharzmischung aus den Komponenten (A) und (B) hergestellt werden. Die Komponente (B) kann in fester oder in Form einer Lösung mit dem wässrigen Kondensat (A) gemischt werden oder bereits zu Beginn der Kondensationsreaktion von Melamin und Formaldehyd zugesetzt werden.

Die vorliegende Erfindung betrifft somit ferner eine wässrige Tränkharzmischung enthaltend
(A) 80 bis 99,9 Gew.-%, bezogen auf die Tränkharzmischung, an wässrigen Kondensaten auf Basis von Melamin und Formaldehyd
(B) 0,1 bis 20 Gew.-%, bezogen auf die Tränkharzmischung, einer oder mehrerer quartärer Ammoniumverbindungen der allgemeinen Formel I

   (R₁R₂R₃R₄N⁺)X⁻ (I)

   wobei
   R₁ für einen C₉-C₂₄ Alkyl- oder Alkoxylrest oder für einen Alkylenoxidrest H(OCₘH₂ₘ)ₙ
      mit m = 1 bis 6 und
      n = 1 bis 10 steht,
      wenn R₂ nicht für einen Alkylenoxidrest mit n = 1 steht und
      n = 2 bis 10,
      wenn R₂ für einen Alkylenoxidrest mit n = 1 steht,
   R₂ für einen C₁-C₂₄ Alkyl- oder Alkoxylrest oder für einen Alkylenoxidrest H(OCₘH₂ₘ)ₙ mit m = 1 bis 6 und n = 1 bis 10, für einen Benzyl- oder Phenylrest steht,
   R₃ und R₄ für einen C₁-C₃-Alkylrest steht und
   X für ein Äquivalent eines Anions steht.

Die erfindungsgemäße Tränkharzmischung weist einen Feststoffgehalt von 40 bis 70 Gew.-% und Viskositäten im Bereich von 20 bis 200 mPas (20°C) auf.

Die Komponente (C) wird zur Herstellung der Tränkharzflotte vorteilhaft kurz vor der Tränkung der cellulosehaltigen Faserstoffen der Tränkharzmischung zugegeben. Die Tränkharzmischung ist 3 bis 4 Wochen lagerstabil.

Bevorzugt wird allerdings zuerst eine wässrige Härtermischung aus den Komponenten (B) und (C) hergestellt.

Somit betrifft die vorliegende Erfindung ferner eine wässrige Härtermischung enthaltend
(B) 60 bis 90 Gew.-%, bezogen auf die Härtermischung, vorteilhaft 70 bis 85 Gew.-%, bevorzugt 75 bis 83 Gew.%, einer oder mehrerer quartärer Ammoniumverbindungen der allgemeinen Formel I

   (R₁ R₂ R₃ R₄ N⁺) X⁻ (I)

   wobei
   R₁ für einen C₉-C₂₄ Alkyl- oder Alkoxylrest oder für einen Alkylenoxidrest H(OCₘH₂ₘ)ₙ
      mit m = 1 bis 6 und
      n = 1 bis 10 steht,
      wenn R₂ nicht für einen Alkylenoxidrest mit n = 1 steht und
      n=2bis 10,
      wenn R₂ für einen Alkylenoxidrest mit n = 1 steht,
   R₂ für einen C₁-C₂₄ Alkyl- oder Alkoxylrest oder für einen Alkylenoxidrest H(OCₘH₂ₘ)ₙ mit m = 1 bis 6 und n = 1 bis 10, für einen Benzyl-oder Phenylrest steht,
   R₃ und R₄ für einen C₁-C₃-Alkylrest steht und
   X für ein Äquivalent eines Anions steht
(C) 10 bis 40 Gew.%, bezogen auf die Härtermischung, vorteilhaft 15 bis 30 Gew.-%, bevorzugt 17 bis 25 Gew.%, einer wässrigen Härterlösung.

Die erfindungsgemäße Härtermischung weist einen Feststoffgehalt von 50 bis 90 Gew.-% auf.

Die erfindungsgemäße Härtermischung stellt ein klares Produkt dar und weist eine Lagerstabilität von mindestens 6 bis 12 Monaten auf.

Die Komponente (A) wird zur Herstellung der Tränkharzflotte vorteilhaft kurz vor der Tränkung der cellulosehaltigen Faserstoffen der Härtermischung zugegeben.

Zweckmäßigerweise wird die erfindungsgemäße Tränkharzflotte erst kurz vor der Imprägnierung hergestellt. Der lmprägnierer lagert folglich separat die erfindungsgemäße Tränkharzmischung, bzw. das Tränkharz und den Härter, bzw. die erfindungsgemäße Härtermischung. Die Verwendung der erfindungsgemäßen Härtermischung hat den Vorteil, dass der Imprägnierer das Verhältnis der Komponente (B) im Vergleich zur Komponente (A) für jede Imprägnierung einstellen kann. Die Menge des eingesetzten Härters in der erfindungsgemäßen Tränkflotte kann gegebenenfalls durch weitere Zugabe an Härter, Komponente (C), erhöht werden.

Ferner können der erfindungsgemäßen Tränkharzflotte weitere dem Fachmann bekannte Zusatz- und/oder Hilfsstoffe zugesetzt werden.

Ferner betrifft die Erfindung einen Tränkharzfilm beinhaltend mit der wässrigen Tränkharzflotte imprägnierte cellulosehaltige Faserstoffe.

Der Tränkharzfilm kann nach allen den Fachmann bekannten Verfahren hergestellt' werden.

Die Imprägnierung erfolgt in der Regel so, dass die cellulosehaltigen Faserstoffe, wie beispielsweise Overlaypapiere, mit der erfindungsgemäßen Tränkharzflotte durchtränkt werden. Beispielsweise werden Overlaypapiere mit einem Flächengewicht im Bereich von 30 bis 80 g/m² mit 200 bis 400 Gew.-%, bezogen auf das Papiergewicht der Imprägnierflotte, bei Raumtemperatur imprägniert. Das imprägnierte Papier wird anschließend bis auf einen Restfeuchtegehalt von ca. 5 bis 10 Gew.-% getrocknet. Zur Imprägnierung eignen sich die üblichen Imprägnieranlagen, welche im sogenannten Ein- oder Zweistufenverfahren die gewünschte Harzmenge auf und in die Papiere bringt. Der Vorteil des Zweistufenverfahrens ist, dass man gegebenenfalls unterschiedliche Tränkharzlösungen für die Vor- und Nachtränkung verwenden kann.

Üblicherweise werden die cellulosehaltigen Faserstoffe derart imprägniert, dass der Tränkharzfilm vorteilhaft
(i) 20 bis 50 Gew.%, bezogen auf den Tränkharzfilm, bevorzugt 25 bis 40 Gew.-%, an cellulosehaltigen Faserstoffen,
(ii) 30 bis 79,9 Gew.-%, bezogen auf den Tränkharzfilm, bevorzugt 50 bis 74,8 Gew.-%, an Kondensaten auf Basis von Melamin und Formaldehyd, und
(iii) 0,1 bis 20 Gew. %, bezogen auf den Tränkharzfilm, bevorzugt 0,2 bis 10 Gew.%, insbesondere 0,2 bis 2, einer oder mehrerer quartärer Ammoniumverbindungen der allgemeinen Formel I

   (R₁ R₂ R₃ R₄ N⁺) X⁻ (I)

   wobei
   R₁ für einen C₉-C₂₄ Alkyl- oder Alkoxylrest oder für einen Alkylenoxidrest H(OCₘH₂ₘ)ₙ
      mit m = 1 bis 6 und
      n = 2 bis 10 steht,
      wenn R₂ nicht für einen Alkylenoxidrest mit n = 1 steht und
      n = 2 bis 10,
      wenn R₂ für einen Alkylenoxidrest mit n = 1 steht,
   R₂ für einen C₁-C₂₄ Alkyl- oder Alkoxylrest oder für einen Alkylenoxidrest H(OCₘH₂ₘ)ₙ mit m = 1 bis 6 und n = 1 bis 10, für einen Benzyl- oder Phenylrest steht,
   R₃ und R₄ für einen C₁-C₃-Alkylrest steht und
   X für ein Äquivalent eines Anions steht
umfasst.

Gegebenenfalls kann die Komponente (iii) auch in den cellulosehaltigen Faserstoffen vorliegen.

Ferner betrifft die Erfindung die Verwendung der erfindungsgemäßen Tränkharzflotte zur Herstellung von filmbeschichteten Werkstoffen mit antistatischen ausgerüsteten Oberflächen.

Die Art und Weise, wie die Beschichtung der Werkstoffe mit den erfindungsgemäßen Tränkharzfilmen erfolgt, ist dem Fachmann bekannt. Üblicherweise werden die auf diese Weise hergestellten erfindungsgemäßen Tränkharzfilme anschließend heiß oder kalt auf das Substrat aufgebracht. Vorteilhaft werden die Filme bei erhöhten Temperaturen von beispielsweise 150 bis 210°C und/oder erhöhten Drücken von beispielsweise 10 bis 100 bar, bevorzug 15 bis 30 bar, während einer Presszeit von beispielsweise 10 Sekunden bis 90 Minuten mit das Substrat verpresst.

Als Substrat kommen vorteilhaft Holzwerkstoffe in Betracht wie beispielsweise Holzfasern oder Spanplatten, MDF- oder HDF-Platten.

Mit den erfindungsgemäßen Tränkharzfilmen lassen sich besonders vorteilhaft Laminate mit verminderter elektrostatischer Aufladbarkeit herstellen.

Folglich betrifft die Erfindung ferner Laminate, die den erfindungsgemäßen Tränkharzfilm beinhaltend.

Das erfindungsgemäße Laminat wirkt ferner antimikrobiell.

Die erfindgungsgemäßen Laminate erfüllen die üblichen anwendungstechnischen Forderungen wie beispielsweise guten Glanz, keine Transparenzverluste und gute Wasserbeständigkeit und zeigen keine Vergrauung.

### Beispiele

### Herstellung der Komponente (A):

Eine Mischung aus 730 g 40 Gew.-% wässrigem Formaldehyd und 334 g Wasser wurde auf 30°C temperiert. Der pH-Wert des Gemisches wurde mit 25 Gew.-% wässriger Natronlauge auf ca. 9,5 eingestellt. Anschließend erfolgte die Zugabe von 790 g Melamin. Das Reaktionsgemisch wurde daraufhin auf 100°C erhitzt, wobei der pH-Wert langsam abfiel., Es wurde für ca. 60 min. bei einem pH-Wert von 8,6 bis 8,8 gerührt. Sobald eine Probe des Reaktionsgemisches eine Trübungstemperatur von 50°C aufwies, wurde das Reaktionsgemisch auf Raumtemperatur abgekühlt.

### Komponente (B):

**Tabelle I: Antistatikum (erfindungsgemäß)**

| Beispiel | Antistatikum |
|---|---|
| 1 | Soya-Alkyl-Dimethyl-Ethyl-Ammonium-Ethylsulfat (80-90%) Dipropylenglykol (10-20%) |
| 2 | Octadecyl-Triethyl-Ammonium-Ethylsulfat (21%) 2-Propanol (40%) Wasser (39%) |
| 3 | Coco-Alkyl-Dimethyl-Ethyl-Ammonium-Ethylsulfat (35%) Wasser (65%) |
| 4 | 2-Hydroxyethyl-Dimethyl-Octyl-Ammonium-Methylsulfonat (100%) |

### Komponente (C):

### Dimethylethanolammoniumsulfit (85 Gew.-%)

Herstellung der Imprägnierflotte:
Zur Herstellung der Imprägnierflotte wurde das Melamin-Formaldehyd-Kondensat mit Wasser auf einen Feststoffgehalt von 55 Gew.-% eingestellt. Zu dem Melamin-Formaldehyd-Kondensat wurden 1,5 Gew.-%, bezogen auf die Tränkharzlösung, eines Antistatikums (1) bis (4) zugegeben. Anschließend wurden die Tränkharzlösungen mit 0,4 Gew.-%, bezogen auf die Tränkharzlösung, einer 85 gewichtsprozentigen wässrigen Lösung eines Härters, und mit 0,3 Gew.-%, bezogen auf die Harzlösung, eines handelsüblichen Netzmittels versetzt.

**Tabelle II: Vergleichsbeispiele**

| Beispiel | Beschaffenheit/Antistatikum |
|---|---|
| 5 | Gemäß DE 41 17 844 |
| 6 | Am Markt etablierte antistatische Laminatplatte der Firma Witex |
| 7 | Handelsübliches Aminoplastharz ohne antistatischen Zusatz |

### Anwendungstechnische Prüfung:

Es wurden handelsübliche Overlaypapiere mit einem Flächengewicht von 46 g/m² imprägniert. Der Harzauftrag betrug 250 bis 350 % und der Restfeuchte-Gehalt wurde auf ca. 5 - 10 % eingestellt. Die auf diese Weise hergestellten Overlayfilme wurden nach dem Kurztaktverfahren mit 20 bar bei 180°C und 50 Sekunden Presszeit auf übliche beschichtungsfähige Faserplatten verpresst.

Die antistatischen Eigenschaften der so hergestellten Oberflächen sind in Tabelle III aufgelistet. Die antistatischen Eigenschaften wurden in einer an die DIN IEC 61340-4-1 angelehnten Prüfung untersucht. Dei diesen Untersuchungen wird die Personenaufladung von Labormusterplatten (30 x 40 cm) direkt gemessen.

**Tabelle III: Antistatische Eigenschaften**

| Beispiel | Spannungsspitzen [V] | Schwankungen [V] | Δ Spannung [V] |
|---|---|---|---|
| 1 | 62 | 26 - 62 | 36 |
| 2 | 80 | 26 - 80 | 54 |
| 3 | 91 | 26 - 91 | 65 |
| 4 | 113 | 33 - 113 | 80 |
| 5 | 215 | 36 - 215 | 179 |
| 6 | 200 | 100 - 200 | 100 |
| 7 | 1000 | 350 - 1000 | 650 |

## Patentansprüche

1. Wässrige Tränkharzflotte enthaltend
(A) 77,5 bis 99,8 Gew.%, bezogen auf die Tränkharzflotte, an wässrigen Kondensaten auf Basis von Melamin und Formaldehyd
(B) 0,1 bis 20 Gew.-%, bezogen auf die Tränkharzflotte, einer oder mehrerer quartärer Ammoniumverbindungen der allgemeinen Formel 1
(R₁ R₂ R₃ R₄ N⁺) X⁻ (I)
wobei
R₁ für einen C₈-C₂₄ Alkyl- oder Alkoxylrest oder für einen Alkylenoxidrest H(OCₘH₂ₘ)ₙ
mit m = 1 bis 6 und
n = 1 bis 10 steht,
wenn R₂ nicht für einen Alkylenoxidrest mit n = 1 und
n = 2 bis 10,
wenn R₂ für einen Alkylenoxidrest mit n = 1 steht,
R₂ für einen C₁-C₂₄-Alkyl oder-Alkoxylrest oder für einen Alkylenoxidrest H(OCₘH₂ₘ)ₙ mit m = 1 bis 6 und n = 1 bis 10, für einen Benzyl- oder Phenylrest steht,
R₃ und R₄ für einen C₁-C₃-Alkylrest steht und
X für ein Äquivalent eines Anions steht
(C) 0,1 bis 2,5 Gew.-%, bezogen auf die Tränkharzflotte, einer wässrigen Härterlösung.

2. Wässrige Tränkharzflotte nach Anspruch 1, wobei bei der Komponente (B) R₁ für einen unsubstituierten C₈-C₂₄ Alkyl- oder Alkoxylrest, einen methylsubstituierten C₈-C₂₃-Alkyl- oder Alkoxylrest oder für einen C₁-C₍₈₋ₓ₎-Alkyl-substituierten C₈-C₍₁₆₊ₓ₎ Alkyl- oder Alkoxylrest mit x von 0 bis 6 steht.

3. Wässrige Tränkharzflotte nach Anspruch 1 oder 2, wobei bei der Komponente (B) R₃ und R₄ für einen Methylrest oder Ethylrest stehen.

4. Wässrige Tränkharzflotte nach den Ansprüchen 1 bis 3, wobei als Komponente (B) eine unsubstituierte oder methyl substituierte C₁₆-C₂₀-Alkyl-Dimethyl- C₁-C₁₂-Alkyl-Ammonium-Verbindung oder eine einfach ethoxylierte Dimethyl-C₁-C₁₂-Alkyl-Ammonium-Verbindung eingesetzt wird.

5. Wässrige Tränkharzflotte nach den Ansprüchen 1 bis 4, wobei bei der Komponente (B) X für Sulfat, Sulfonat oder Hydroxid-Ionen steht.

6. Wässrige Tränkharzflotte nach den Ansprüchen 1 bis 5, wobei die Komponente (B) in einer Menge von 0,5 bis 3 Gew.-% eingesetzt wird.

7. Wässrige Tränkharzmischung enthaltend
(A) 80 bis 99,9 Gew.-%, bezogen auf die Tränkharzmischung, an wässrigen Kondensaten auf Basis von Melamin und Formaldehyd
(B) 0,1 bis 20 Gew.%, bezogen auf die Tränkharzmischung, einer oder mehrerer quartärer Ammoniumverbindungen der allgemeinen Formel I
(R₁R₂R₃R₄N⁺)X⁻ (I)
wobei
R₁ für einen C₉-C₂₄ Alkyl- oder Alkoxylrest oder für einen Alkylenoxidrest H(OCₘH₂ₘ)ₙ
mit m=1 bis 6 und
n = 1 bis 10 steht,
wenn R₂ nicht für einen Alkylenoxidrest mit n = 1 und
n = 2 bis 10,
wenn R₂ für einen Alkylenoxidrest mit n = 1 steht,
R₂ für einen C₁-C₂₄ Alkyl- oder Alkoxylrest oder für einen Alkylenoxidrest H(OCₘH₂ₘ)ₙ mit m = 1 bis 6 und n = 1 bis 10, für einen Benzyl- oder Phenylrest steht,
R₃ und R₄ für einen C₁-C₃-Alkylrest steht und
X für ein Äquivalent eines Anions steht.

8. Tränkharzfilm beinhaltend mit der wässrigen Tränkharzflotte gemäß den Ansprüchen 1 bis 6 imprägnierte cellulosehaltige Faserstoffe.

9. Tränkharzfilm nach Anspruch 8 umfassend
(i) 20 bis 40 Gew.-%, bezogen auf den Tränkharzfilm, an cellulosehaltigen Faserstoffen,
(ii) 40 bis 79,9 Gew.-%, bezogen auf den Tränkharzfilm, an Kondensaten auf Basis von Melamin und Formaldehyd, und
(iii) 0,1 bis 20 Gew. -%, bezogen auf den Tränkharzfilm, einer oder mehrerer quartärer Ammoniumverbindungen der allgemeinen Formel 1
(R₁ R₂ R₃ R₄ N⁺) X ⁻ (I)
wobei
R₁ für einen C₉-C₂₄ Alkyl- oder Alkoxylrest oder für einen Alkylenoxidrest H(OCₘH₂ₘ)ₙ
mit m = 1 bis 6 und
n = 1 bis 10 steht,
wenn R₂ nicht für einen Alkylenoxidrest mit n =1 und
n = 2 bis 10,
wenn R₂ für einen Alkylenoxidrest mit n = 1 sieht,
R₂ für einen C₁-C₂₄ Alkyl- oder Alkoxylrest oder für einen Alklenoxidrest H(OCₘH₂ₘ)ₙ mit m = 1 bis 6 und n = 1 bis 10, für einen Benzyl- oder Phenylrest steht,
R₃ und R₄ für einen C₁-C₃-Alkylrrest steht und
X für ein Äquivalent eines Anions steht.

10. Laminat beinhaltend einen Tränkharzfilm nach Anspruch 8 oder 9.

11. Verwendung der Tränkharzflotte gemäß der Ansprüche 1 bis 6 zur Herstellung von filmbeschichteten Werkstoffen mit antistatischen ausgerüsteten Oberflächen.

12. Verwendung einer wässrige Härtermischung enthaltend
(B) 60 bis 90 Gew.-%, bezogen auf die Härtermischung, einer oder mehrerer quartärer Ammoniumverbindungen der allgemeinen Formel I
(R₁R₂R₃R₄N⁺)X⁻ (I)
wobei
R₁ für einen C₉-C₂₄ Alkyl- oder Alkoxylrest oder für einen Alkylenoxidrest H(OCₘH₂ₘ)ₙ
mit m = 1 bis 6 und
n = 1 bis 10 steht,
wenn R₂ nicht für einen Alkylenoxidrest mit n = 1 und
n=2bis 10,
wenn R₂ für einen Alkylenoxidrest mit n = 1 steht,
R₂ für einen C₁-C₂₄ Alkyl- oder Alkoxylrest oder für einen Alkylenoxidrest H(OCₘH₂ₘ)ₙ mit m = 1 bis 6 und n = 1 bis 10, für einen Benzyl- oder Phenylrest steht,
R₃ und R₄ für einen C₁-C₃-Alkylrest steht und
X für ein Äquivalent eines Anions steht
(C) 10 bis 40 Gew.-%, bezogen auf die Härtermischung, einer wässrigen Härterlösung
zum Härten von wässrigen Kondensaten auf Basis von Melamin und Formaldehyd.

## Claims

1. An aqueous impregnating resin liquor comprising
(A) from 77.5 to 99.8% by weight, based on the impregnating resin liquor, of aqueous condensates based on melamine and formaldehyde
(B) from 0.1 to 20% by weight, based on the impregnating resin liquor, of one or more quaternary ammonium compounds of the general formula I
(R₁ R₂ R₃ R₄ N⁺) X⁻ (1)
where
R₁ is a C₉-C₂₄-alkyl or alkoxy radical or an alkylene oxide radical H(OCₘH₂ₘ)ₙ
where m = 1 to 6 and
n = 1 to 10,
if R₂ is not an alkylene oxide radical where n = 1, and
n = 2 to 10,
if R₂ is an alkylene oxide radical where n = 1,
R₂ is a C₁-C₂₄-alkyl or alkoxy radical or an alkylene oxide radical H(OCₘH₂ₘ)ₙ where m = 1 to 6 and n = 1 to 10, or a benzyl or phenyl radical,
R₃ and R₄ are a C₁-C₃-alkyl radical and
X s one equivalent of an anion
(C) from 0.1 to 2.5% by weight, based on the impregnating resin liquor, of an aqueous curing agent solution.

2. The aqueous impregnating resin liquor according to claim 1, R₁ being an unsubstituted C₈-C₂₄-alkyl or alkoxy radical, a methyl-substituted C₈-C₂₃-alkyl or alkoxy radical or a C₁-C₍₈₋ₓ₎-alkyl-substituted C₈-C₍₁₈₊ₓ₎-alkyl or alkoxy radical
where x is 0 to 6 in component (B).

3. The aqueous impregnating resin liquor according to claim 1 or 2, R₃ and R₄ being a methyl radical or ethyl radical in component (B).

4. The aqueous impregnating resin liquor according to any of claims 1 to 3, an unsubstituted or methyl-substituted C₁₆-C₂₀-alkyl-dimethyl-C₁-C₁₂-alkylammonium compound or a monoethoxylated dlmethyl-C₁-C₁₂-alkylammonium compound being used as component (B).

5. The aqueous impregnating resin liquor according to any of claims 1 to 4, X being sulfate, sulfonate or hydroxide ions in component (B).

6. The aqueous impregnating resin liquor according to any of claims 1 to 5, component (B) being used in an amount of from 0.5 to 3% by weight.

7. An aqueous impregnating resin mixture comprising
(A) from 80 to 99.9% by weight, based on the impregnating resin mixture, of aqueous condensates based on melamine and formaldehyde
(B) from 0.1 to 20% by weight, based on the impregnating resin mixture, of one or more quaternary ammonium compounds of the general formula
(R₁ R₂ R₃ R₄ N⁺) X⁻ (I)
where
R₁ is a C₉-C₂₄-alkyl or alkoxy radical or an alkylene oxide radical H(OCₘH₂ₘ)ₙ
where m = 1 to 6 and
n = 1 to 10,
if R₂ is not an alkylene oxide radical where
n = 1, and
n = 2 to 10,
if R₂ is an alkylene oxide radical where n = 1,
R₂ is a C₁-C₂₄-alkyl or alkoxy radical or an alkylene oxide radical H(OCₘH₂ₘ)ₙ where m = 1 to 6 and n = 1 to 10, or a benzyl or phenyl radical,
R₃ and R₄ are a C₁-C₃-alkyl radical and
X is one equivalent of an anion.

8. An impregnating resin film comprising cellulase-containing fibers impregnated with the aqueous impregnating resin liquor according to any of claims 1 to 6.

9. The impregnating resin film according to claim 8, comprising
(i) from 20 to 40% by weight, based on the impregnating resin film, of cellulose-containing fibers,
(ii) from 40 to 79.9% by weight, based on the impregnating resin film, of condensates based on melamine and formaldehyde, and
(iii) from 0.1 to 20% by weight, based on the impregnating resin film, of one or more quaternary ammonium compounds of the general formula I
(R₁ R₂ R₃ R₄ N⁺)X⁻ (I)
where
R₁ is a C₉-C₂₄-alkyl or alkoxy radical or an alkylene oxide radical H(OCmH₂ₘ)ₙ
where m = 1 to 6 and
n = 1 to 10,
if R₂ is not an alkylene oxide radical where n = 1, and
n=2 to 10,
if R₂ is an alkylene oxide radical where n = 1,
R₂ is a C₁-C₂₄-alkyl or alkoxy radical or an alkylene oxide radical H(OCₘH₂ₘ)ₙ where m = 1 to 6 and n = to 10, or a benzyl or phenyl radical,
R₃ and R₄ are a C₁-C₃-alkyl radical and
X is one equivalent of an anion.

10. A laminate comprising an impregnating resin film according to claim 8 or 9.

11. The use of the impregnating resin liquor according to any of claims 1 to 6 for the production of film-coated materials having surfaces provided with antistatic treatment.

12. The use of an aqueous curing agent mixture comprising
(B) from 60 to 90% by weight, based on the curing agent mixture, of one or more quaternary ammonium compounds of the general formula I
(R₁ R₂ R₃ R₄ N⁺) X⁻ (I)
where
R₁ is a C₉-C₂₄-alkyl or alkoxy radical or an alkylene oxide radical H(OCₘH₂ₘ)ₙ
where m = 1 to 6 and
n=1 to 10,
if R₂ is not an alkylene oxide radical where
n : 1, and
n= 2 to 10,
if R₂ is an alkylene oxide radical where n = 1,
R₂ is a C₁-C₂₄-alkyl or alkoxy radical or an alkylene oxide radical H(OCₘH₂ₘ)ₙ where m = 1 to 6 and n = 1 to 10, or a benzyl or phenyl radical,
R₃ and R₄ are a C₁-C₃-alkyl radical and
X is one equivalent of an anion
(C) from 10 to 40% by weight, based on the curing agent mixture, of an aqueous curing agent solution
for curing aqueous condensates based on melamine and formaldehyde.

## Revendications

1. Bain aqueux de résine d'imprégnation contenant :
(A) 77,5 à 99,8 % en poids, par rapport au bain de résine d'imprégnation, de produits condensés aqueux à base de mélamine et de formaldéhyde
(B) 0,1 à 20 % en poids, par rapport au bain de résine d'imprégnation, d'un ou de plusieurs composés d'ammonium quaternaire de formule générale I :
(R₁R₂R₃R₄N⁺)X⁻ (I)
dans laquelle
R₁ représente un radical alcoxyle ou alkyle en C₉-C₂₄ ou un radical oxyde d'alkylène
H(OCₘH₂ₘ)ₙ
avec m = 1 à 6 et
n = 1 à 10,
quand R₂ ne représente pas un radical oxyde d'alkylène avec n = 1, et
n = 2 à 10,
quand R₂ représente un radical oxyde d'alkylène avec n = 1,
R₂ représente un radical alcoxyle ou alkyle en C₁-C₂₄ ou un radical oxyde d'alkylène H(OCₘH₂ₘ)ₙ avec m = 1 à 6 et n = 1 à 10, un radical benzyle ou un radical phényle,
R₃ et R₄ représentent un radical alkyle en C₁-C₃ et
X représente un équivalent d'un anion
(C) 0,1 à 2,5 % en poids, par rapport au bain de résine d'imprégnation, d'une solution aqueuse de durcisseur.

2. Bain aqueux de résine d'imprégnation selon la revendication 1, R₁ représentant, pour le composant (B), un radical alcoxyle ou alkyle en C₈-C₂₄ non substitué, un radical alcoxyle ou alkyle en C₈-C₂₃ substitué par du méthyle ou un radical alcoxyle ou alkyle en C₈-C₍₁₆₊ₓ₎ substitué par de l'alkyle en C₁-C₍₈₋ₓ₎ avec x qui vaut de 0 à 6.

3. Bain aqueux de résine d'imprégnation selon la revendication 1 ou 2, R₃ et R₄ représentant, pour le composant (B), un radical méthyle ou un radical éthyle.

4. Bain aqueux de résine d'imprégnation selon l'une quelconque des revendications 1 à 3, un composé d'alkylammonium en C₁-C₁₂ d' alkyldiméthyle en C₁₆-C₂₀ non substitué ou substitué par du méthyle ou un composé monoéthoxylé d'alkylammonium en C₁-C₁₂ de diméthyle étant utilisé en tant que composant (B).

5. Bain aqueux de résine d'imprégnation selon l'une quelconque des revendications 1 à 4, X représentant, pour le composant (B), du sulfate, du sulfonate ou des ions hydroxyde.

6. Bain aqueux de résine d'imprégnation selon l'une quelconque des revendications 1 à 5, le composant (B) étant utilisé en une quantité de 0,5 à 3 % en poids.

7. Mélange aqueux de résine d'imprégnation contenant :
(A) 80 à 99,9 % en poids, par rapport au mélange de résine d'imprégnation, de produits condensés aqueux à base de mélamine et de formaldéhyde,
(B) 0,1 à 20 % en poids, par rapport au mélange de résine d'imprégnation, d'un ou de plusieurs composés d'ammonium quaternaire de formule générale I :
(R₁R₂R₃R₄N⁺) X⁻ (I)
dans laquelle
R₁ représente un radical alcoxyle ou alkyle en C₉-C₂₄ ou un radical oxyde d'alkylène
H(OCₘH₂ₘ)ₙ
avec m = 1 à 6 et
n = 1 à 10,
quand R₂ ne représente pas un radical oxyde d'alkylène avec n = 1, et
n = 2 à 10,
quand R₂ représente un radical oxyde d'alkylène avec n = 1,
R₂ représente un radical alcoxyle ou alkyle en C₁-C₂₄ ou un radical oxyde d'alkylène H(OCₘH₂ₘ)ₙ avec m = 1 à 6 et n = 1 à 10, un radical benzyle ou un radical phényle,
R₃ et R₄ représentent un radical alkyle en C₁-C₃ et
X représente un équivalent d'un anion.

8. Film de résine d'imprégnation contenant des matières fibreuses contenant de la cellulose imprégnées avec le bain aqueux de résine d'imprégnation selon les revendications 1 à 6.

9. Film de résine d'imprégnation selon la revendication 8 comportant :
(i) 20 à 40 % en poids, par rapport au film de résine d'imprégnation, de matières fibreuses contenant de la cellulose,
(ii) 40 à 79,9 % en poids, par rapport au film de résine d'imprégnation, de produits condensés à base de mélamine et de formaldéhyde, et
(iii) 0,1 à 20% en poids, par rapport au film de résine d'imprégnation, d'un ou de plusieurs composés d'ammonium quaternaire de formule générale I
(R₁R₂R₃R₄N⁺)X⁻ (I)
dans laquelle
R₁ représente un radical alcoxyle ou alkyle en C₉C₂₄ ou un radical oxyde d'alkylène
H (OCₘR₂ₘ)ₙ
avec m = 1 à 6 et
n = 1 à 10,
quand R₂ ne représente pas un radical oxyde d'alkylène avec n = 1, et
n = 2 à 10,
quand R₂ représente un radical oxyde d' alkylène, avec n = 1,
R₂ représente un radical alcoxyle ou alkyle en C₁-C₂₄ ou un radical oxyde d'alkylène H(OCₘH₂ₘ)ₙ avec m = 1 à 6 et n = 1 à 10, un radical benzyle ou un radical phényle,
R₃ et R₄ représentent un radical alkyle en C₁-C₃ et
X représente un équivalent d'un anion

10. Stratifié contenant un film de résine d'imprégnation selon la revendication 8 ou 9.

11. Utilisation du bain de résine d'imprégnation selon les revendications 1 à 6 pour la fabrication de matériaux recouverts d'un film ayant des surfaces pourvues de propriétés antistatiques.

12. Utilisation d'un mélange aqueux de durcisseur contenant :
(B) 60 à 90 % en poids, par rapport au mélange de durcisseur, d'un ou de plusieurs composés d'ammonium quaternaire de formule générale I
(R₁R₂R₃RI1N⁺) X⁻ (I)
dans laquelle
R₁ représente un radical alcoxyle ou alkyle en C₉-C₂₄ ou un radical oxyde d'alkylène
H(OCₘH₂ₘ)ₙ
avec m = 1 à 6 et
n = 1 à 10,
quand R₂ ne représente pas un radical oxyde d'alkylène avec n = 1, et
n = 2 à 10,
quand R₂ représente un radical oxyde d'alkylène avec n = 1,
R₂ représente un radical alcoxyle ou alkyle en C₁-C₂₄ ou un radical oxyde d'alkylène H(OCₘH2ₘ)ₙ avec m = 1 à 6 et n = 1 à 10, un radical benzyle ou un radical phényle,
R₃ et R₄ représentent un radical alkyle en C₁-C₃ et
X représente un équivalent d'un anion
(C) 10 à 40 % en poids, par rapport au mélange de durcisseur, d'une solution aqueuse de durcisseur
pour le durcissement de produits condensés aqueux à base de mélamine et de formaldéhyde.
